# EUROPÄISCHE PATENTSCHRIFT

(11) **EP 0 881 849 B1**
(45) Veröffentlichungstag und Bekanntmachung des Hinweises auf die Patenterteilung: **28.02.2007**
(21) Anmeldenummer: 98440110.9
(22) Anmeldetag: 25.05.1998
(51) Int. Cl.: H04Q 7/22, H04Q 7/30, H04Q 7/32, H04Q 7/38

(54) **Funkkommunikationssystem mit einer ortsfesten und einer beweglichen Funkvorrichtung**
Radio communication system with fixed and mobile radio equipment
Système de radio communication avec équipments fixe et mobile

(30) Priorität: 28.05.1997 DE 19722219
(43) Veröffentlichungstag der Anmeldung: 02.12.1998
(73) Patentinhaber: ALCATEL, 75008 Paris (FR)
(72) Erfinder: Blanke, Gero, 71711 Murr (DE)
(74) Vertreter: Knecht, Ulrich Karl

(56) Entgegenhaltungen:
- EP-A- 0 719 063
- EP-A- 0 767 557
- WO-A-92/11706
- MOULY M ET AL: "The GSM system for Mobile Communications" FR,LASSAY-LES-CHATEAUX, EUROPE MEDIA, 1993, Seiten 214-215,333-336, XP002089392

## Beschreibung

Die Erfindung betrifft ein Funkkommunikationssystem mit einer ortsfesten Funkvorrichtung und einer beweglichen Funkvorrichtung gemäß dem Oberbegriff des Anspruch 1. Außerdem betrifft die Erfindung eine bewegliche und eine ortsfeste Funkvorrichtung für ein solches Funksystem sowie ein Verfahren zum Aufbau einer Funkverbindung in einem solchen Funkkommunikationssystem gemäß dem Oberbegriff eines der nebengeordneten Ansprüchen.

Ein bekanntes Funkkommunikationssystem mit einer ortsfesten Funkvorrichtung und einer beweglichen Funkvorrichtung, die beide über eine Funkverbindung miteinander Funksignale austauschen ist in dem Buch "The GSM System for Mobile Communications" beschrieben, das von den Autoren M. Mouly und M.-B. Pautet 1992 im Eigenverlag mit Sitz in Palaiseau, Frankreich herausgegeben worden ist. Das in dem Buch beschriebene Funkkommunikationssystem ist das öffentliche Mobilfunksystem "Global System for Mobile Communications" (kurz GSM), dessen technische Komponenten den gleichnamigen Standard "GSM" erfüllen. Nach diesem Standard ist ein Funkprotokoll vorgegeben, gemäß dem Funksignale über die Funkverbindung zwischen den ortsfesten Funkvorrichtung -auch Basisstationen genannt- und den beweglichen Funkvorrichtungen -auch Mobilstationen genannt- austauschen. In dem Buch von M. Mouly und M.-B. Pautet ist auf den Seiten 192-193 im Kapitel 4.1.3.1 beschrieben, daß für die Basisstation die Funkkanäle FCCH (Frequency Correction CHannel) und SCH (Synchronisation CHannel) bereitgestellt werden, auf denen ausschließlich die Basisstation senden darf. Diese Funkkanäle FCCH und SCH dienen zur Übertragung von Signalisierungsdaten in Abwärtsrichtung und werden daher auch als "downlink channel" bezeichnet. Außerdem ist dort in dem Buch beschrieben, daß für die Mobilstation der Funkkanäle RACH (Random Access CHannel) bereitgestellt wird, auf dem ausschließlich die Mobilstation senden darf. Dieser Funkkanal RACH dient zur Übertragung von Signalisierungsdaten in Aufwärtsrichtung und wird daher auch als "uplink channel" bezeichnet.

Demnach ist ein Funkommunikationssystem bekannt, das eine ortsfeste Funkvorrichtung (Basisstation) und eine beweglichen Funkvorrichtung (Mobilstation) enthält, die beide über eine Funkverbindung miteinander Funksignale austauschen gemäß eines vorbestimmten Funkprotokolls, wonach erste Funksignale auf den Kanälen FCCH und SCH ausschließlich zum Senden durch die ortsfeste Funkvorrichtung und zweite Funksignale auf dem Kanal RACH ausschließlich zum Senden durch die bewegliche Funkvorrichtung vorgesehen sind.

Es ist wünschenswert, beim Aufbau eines neuen Funkkommunikationssystems weitgehend auf bereits vorhandene Technik zurückzugreifen, sodaß Kosten für Neuentwicklungen eingespart werden können. Würde man beim Aufbau eines neuen Funkkommunikationssystems etwa auf die weitverbreitete GSM-Mobilfunktechnik zurückgreifen, hätte man folgende Probleme zu lösen: Das neue Funkkommunikationssystem und die bereits vorhandenen GSM-Mobilfunksysteme könnten sich gegenseitig stören aufgrund von Interferenzproblemen bei den Funkübertragungen. Demnach wäre der Einsatz des neuen Funkkommunikationssystems auf solche Bereiche beschränkt, die noch nicht von einem GSM-Mobilfunksystem versorgt würden. Oder man müßte ein Funkkomunikationssystem grundlegend neu konzipieren.

In EP-A-268 375 wird vorgeschlagen, ein neues zellulares Funksystem für den Einsatz als privates Funkkomunnikationssystem dadurch zu schaffen, daß die Basisstationen mit einem Abtastempfänger ausgestatttet werden und daß ein grundlegend neues Funkprotokoll vorgegeben wird. Auch mit dem sogenannten DECT - Funksystem (Digital Enhanced Cordless Telephone) wurde gegenüber bereits vorhandener Technik ein grundlegend neu konzipiertes Funksystem geschaffen. Damit waren aber umfangreiche Neuentwicklungen erforderlich.

Aufgabe der Erfindung ist es, ein neues Funkkommunikationssystem zu schaffen, wobei weitgehend auf vorhandene Technik zurückgegriffen werden kann. Das neue Funkkomunikationssystem soll auch für den Einsatz in solchen Bereichen geeignet sein, die bereits von vorhandenen Funkkomunikationssystemen versorgt werden. Es ist besonders wünschenswert, daß das neue Funkkomunikationssystem als privates Mobilfunksystem ausgeführt werden kann.

Gelöst wird die Aufgabe durch ein Funkkommunikationssystem mit den Merkmalen nach Anspruch 1 sowie durch Funkvorrichtungen dafür und durch ein Verfahren mit den Merkmalen des entsprechenden nebengeorneten Anspruchs.

Es wird ein Funkkommunikationssystem vorgeschlagen, das eine ortsfeste Funkvorrichtung und eine beweglichen Funkvorrichtung enthält, die über eine Funkverbindung miteinander Funksignale austauschen gemäß eines vorbestimmten Funkprotokolls, bei dem erste Funksignale ausschließlich zum Senden durch die ortsfeste Funkvorrichtung -d.h. Funksignale zum Senden in Abwärtsrichtung- und zweite Funksignale ausschließlich zum Senden durch die bewegliche Funkvorrichtung -d.h. Funksignale zum Senden in Aufwärtsrichtung- vorgesehen sind, wobei zum Aufbau der Funkverbindung zumindest eine der Funkvorrichtungen entgegen dem Funkprotokoll eines derjenigen Funksignale sendet, das eigentlich zum Senden durch die andere Funkvorrichtung vorgesehen ist.

Außerdem wird ein Verfahren vorgeschlagen zum Aufbau einer Funkverbindung in einem solchen Funkkommunikationssystem mit einer ortsfesten Funkvorrichtung und einer beweglichen Funkvorrichtung, die beide miteinander Funksignale austauschen gemäß des vorbestimmten Funkprotokolls, wonach erste Funksignale ausschließlich zum Senden durch die ortsfeste Funkvorrichtung und zweite Funksignale ausschließlich zum Senden durch die bewegliche Funkvorrichtung vorgesehen sind, wobei in einem ersten Schritt zum Aufbau der Funkverbindung zumindest eine der Funkvorrichtungen entgegen dem Funkprotokoll eines derjenigen Funksignale sendet, das eigentlich zum Senden durch die andere Funkvorrichtung vorgesehen ist.

Dadurch wird erreicht, daß das vorgeschlagene Funkkomunikationssystem aus Komponenten, wie ortsfeste und bewegliche Funkvorrichtungen, aufgebaut ist, die mit geringem Aufwand aus bereits vorhandenen Komponenten eines bekannten Funksystems entwickelt werden können. Dazu sind lediglich kleine Eingriffe in den vorhandenen Funkvorrichtungen erforderlich, insbesondere Eingriffe in denjenigen Steuerungsteilen, die die Abwicklung der Funkommunikation gemäß des vorgegebenen Funkprotokolls steuern. Bei Funkvorrichtungen mit digitalen Steuerungsteilen, die einen Mikroprozessor enthalten, sind demnach nur Änderungen der Steuerungssoftware erforderlich.

Die Erfindung macht sich die Erkenntnis zu Nutze, daß Funksignale, die entgegen dem bekannten Funkprotokoll in die falsche Übertragungsrichtung gesendet werden, nicht von herkömmlichen Funkvorrichtungen empfangen, demoduliert oder dekodiert werden können. Damit stören diese Funksignale nicht den Empfang der bereits vorhandenen Funkvorrichtungen des bekannten Funksystems. Die Störungen werden auch dadurch verringert, daß das Funksignal nicht ständig gesendet werden braucht, wie es z.B. im GSM-System üblich ist, wo auf dem BCCH ständig gesendet wird. Außerdem wird verhindert, daß sich eine unerwünschte Funkverbindung zwischen einer neuen Funkvorrichtung (z.B. einer neuen Mobilstation) und einer vorhandenen Funkvorrichtung (z.B. einer vorhandenen GSM-Basisstation) aufbaut.

Die neuen Funkvorrichtungen können jedoch diese in die falsche Übertragungsrichtung gesendeten Funksignale richtig empfangen. Die neuen Funkvorrichtungen erkennen sich gegenseitig; eine Funkverbindung kann schnell und einfach aufgebaut werden.

Die Erfindung schafft neue Funkvorrichtungen, die zumindest beim Aufbau der funkverbindung entgegen einem vorhandenen Funkprotokoll arbeiten, d.h. die nach einem neuen, modifizierten Funkprotokoll arbeiten. Wird z.B. das GSM-Protokoll modifiziert, so entfällt das stetige Senden der Basistation auf dem BCCH. Dadurch werden Interferenzen mit anderen, störenden Funkvorrichtungen vermieden.

Im weiteren wird die Erfindung anhand eines Ausführungsbeispiels beschrieben. Dazu wird auf folgende Zeichnungen, die schematische Darstellungen wiedergeben, Bezug genommen:
- Fig. 1,: die den Aufbau eines herkömmlichen Funksystems zeigt;
- Fig. 2,: die den Aufbau eines erfindungsgemäßen Funksystems zeigt; und
- Fig. 3,: die das Ablaufdiagramm für ein erfindungsgemäßes Verfahren zeigt.

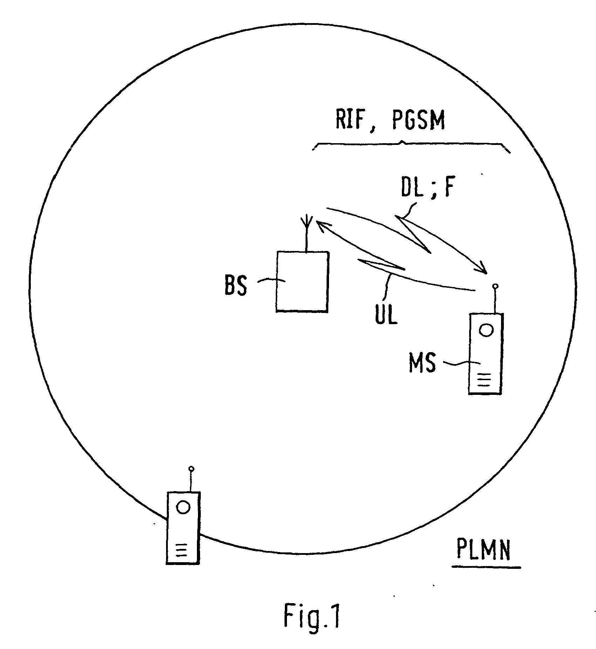

Fig. 1 zeigt schematisch den Aufbau eines herkömmlichen Funksystems, nämlich den Aufbau eines öffentlichen, zellularen Mobilfunksystems PLMN. Zur Vereinfachung der Zeichnung ist nur eine einzige Funkzelle des Mobilfunksystems dargestellt. Jede Funkzelle wird von einer ortsfesten Funkvorrichtung BS, im weiteren auch Basisstation genannt, versorgt. Die Basisstation BS kann mit mehreren beweglichen Funkvorrichtungen, im weiteren auch Mobilstationen genannt, Funksignale austauschen. In Fig. ist exemplarisch für mehrere Mobilstationen nur eine Mobilstation MS dargestellt. Das in Fig. 1 gezeigte herkömmliche Mobilfunksystem ist nach dem GSM-Standard (GSM: Global System for Mobile Communications) ausgelegt. Für die Funkkommunikation zwischen den Mobilstationen und der Basisstation werden nach dem GSM-Standard digitale Funksignale im TDMA-Zugriffsverfahren (TDMA: Time Division Multiple Access) über eine Funkverbindung RIF ausgetauscht. Die Funkverbindung RIF, im weiteren auch Funkschnittstelle genannt, ist eine FDD-Funkverbindung (FDD: Frequency Division Duplex), d.h. eine Frequenz-Duplex-Funkverbindung mit einer Aufwärtsrichtung UL, dem sogenannten "uplink" und mit einer Abwärtsrichtung DL, dem sogenannten "downlink". Der "uplink" UL umfaßt mindestens eine Trägerfrequenz, auf der die Mobilstationen zur Basisstation senden können. Der "downlink" DL umfaßt mindestens eine Trägerfrequenz, auf der die Basisstation zu den Mobilstationen senden können.

Zum Austausch der Funksignale definiert der GSM-Standard ein Funkprotokoll PGSM, nach dem die Funkverbindung RIF aufgebaut wird und nach dem die Funkkommunikation abgewickelt wird. Dieses aus dem GSM-Standard bekannte Funkprotokoll gibt erste Funksignale vor, die ausschließlich zum Senden durch die Basisstation vorgesehen sind, wie etwa das für die Abstimmung der Sende- und Empfangsfrequenzen vorgesehene Funksignal FB, der sogenannte "frequency correction burst". Dieses Funksignal FB wird in der Basisstation erzeugt aufgrund einer Messung im Empfangsteil, mit der festgestellt wird, wie weit die Sendefrequenzen der Mobilstationen von den vorgegebenen Sollwerten abweichen. Zur Korrektur der Sendefrequenzen in den Mobilstationen berechnet die Basisstation für jede Mobilstation MS einen Datenwert, der die gemessenen Abweichung - den sogenannten "frequency offset"- angibt. Die Abweichung vom Sollwert muß üblicherweise innerhalb eines vorgegebenen Toleranzbereiches liegen.

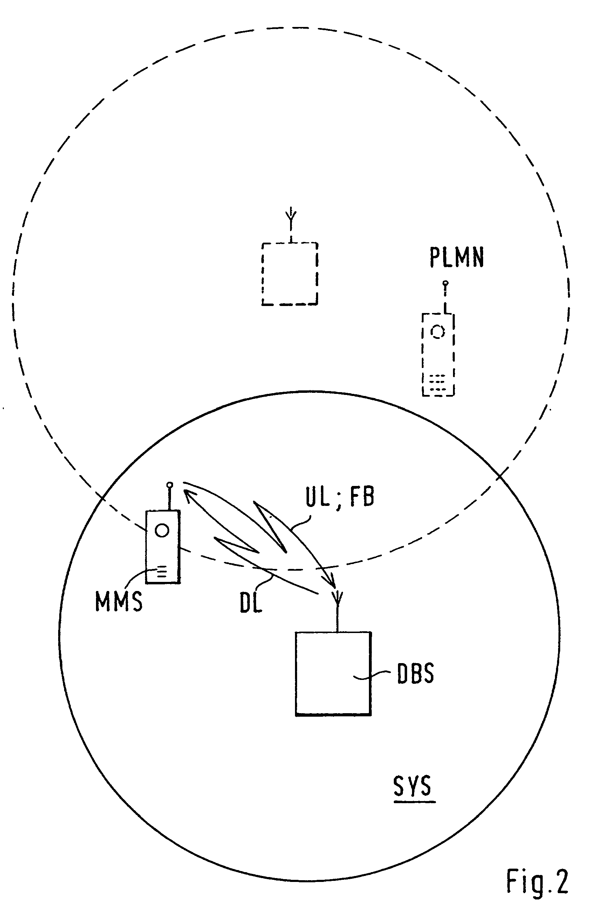

In Fig. 2 ist schematisch der Aufbau eines erfindungsgemäßen Funkkommunikationssystem SYS dargestellt, dessen Versorgungsbereich sich zum Teil mit dem des zuvor genannten öffentlichen Mobilfunksystems PLMN überlappt.

Das dargestellte Funkkommunikationssystems SYS enthält lediglich eine einzige ortsfeste Funkvorichtung DBS, die eine Funkzelle ausleuchtet. Die Erfindung ist jedoch nicht auf diese Ausführung mit nur einer Funkzelle beschränkt. Anhand des dargestellten Ausführungsbeispiels mit einer Funkzelle läßt sich jedoch die Erfindung besonders gut beschreiben. Die folgende Beschreibung zeigt besonders deutlich, wie die Erfindung das eingangs genannte Problem löst:

Das vorgeschlagene Funksystem SYS enthält neben der genannten ortsfesten Funkstation DBS (auch Basisstation genannt), auch mindestens eine bewegliche Funkvorrichtung MMS (auch Mobilstation genannt). Die Basisstation DBS und die Mobilstation MMS tauschen zur Funkkommunikation Funksignale in Abwärtsrichtung DL und in Aufwärtsrichtung UL aus. Wenn die Funkverbindung zwischen den beiden Stationen DBS und MMS bereits aufgebaut ist, werden die Funksignale gemäß des herkömmlichen, aus dem GSM-Standard bekannten, Funkprotokolls ausgetauscht. Zum Aufbau der Funkverbindung wird jedoch von dem herkömmlichen Funkprotokoll abgewichen, wobei zumindest einzelne Funksignale entgegen dem herkömmlichen Funkprotokoll verwendet werden.

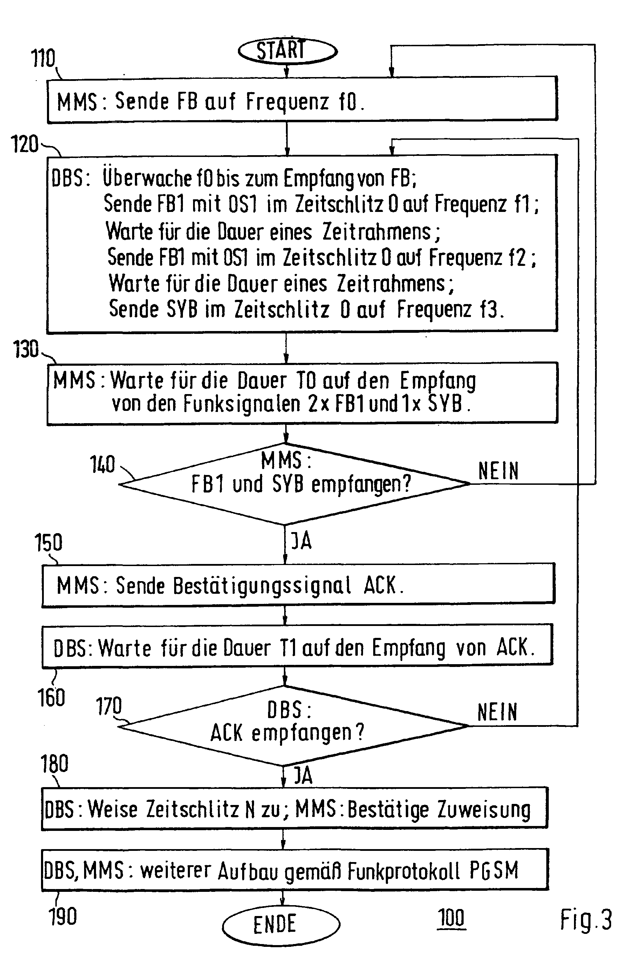

Fig. 3 zeigt das Ablaufdiagramm eines erfindungsgemäßen Verfahrens 100 zum Aufbau der Funkverbindung. Das modifizierte Verfahren besteht im wesentlichen aus folgenden neuen Schritten 110 bis 190:

Nach dem Start des Verfahrens, wird in einem ersten Schritt 110 von der Mobilstation MMS ein Funksignal FB an die Basisstation gesendet. Das Funksignal FB ist der bereits genannte "frequency correction burst", der eigentlich nach dem GSM-Funkprotokoll nur zum Senden durch die Basisstation vorgesehen ist. Die Mobilstation, die noch mit der Basistation synchronisiert ist, sendet zu einem beliebigen Zeitpunkt das Funksignal FB auf einer Frequenz f0, die auch gemäß dem Funkprotokoll hierfür vorgesehen ist. Falls die Mobilstation jedoch über Synchronisationsinformationen zu der Basistation verfügen sollte, ist es vorteilhaft, daß die Mobilstation das Funksignal nicht wie üblich im ersten Zeitschlitz (Zeitschlitznummer N=0), sondern in einem der anderen Zeitschlitze (N=1, 2, 3... oder 7) sendet. Dadurch werden Störungen mit anderen Funkvorrichtungen vermieden. Außerdem ist es vorteilhaft, wenn das Funksignal FB einen Datenwert enthält, der eine Frequenzabweichung angibt, die willkürlich so gewählt wird, daß sie eindeutig außerhalb des üblichen Toleranzbereiches liegt.

In einem nächsten Schritt 120 stellt die Basisstation DBS, die die Empfangsfrequenz f0 überwacht, fest, daß ein Funksignal FB entgegen dem üblichen Funkprotokoll von einer Mobilstation gesendet wurde. Da eine herkömmliche Mobilstation ein solches Funksignal nicht senden kann, wird festgestellt, daß es eine modifizierte Mobilstation sein muß, die das Funksignal FB sendet. Die Verwendung des "frequency correction burst" ist deshalb vorteilhaft, weil dieser spezielle burst sich grundlegend von den anderen bursts unterscheidet.

Die Basisstation sendet im Zeitschlitz 0 auf der Frequenz f1 ein Funksignal FB1. Im nächsten Zeitrahmen sendet sie dieses Funksignal FB1 nochmals, jedoch nicht auf derselben Frequenz f1, sondern auf einer anderen Frequenz f2. Da das übliche Funkprotokoll vorschreibt, das Funksignal FB1 nur einmal zu senden, unterscheidet sich auch dieser Verfahrensschritt 120 von der üblichen Vorgehensweise. Demnach sendet die ortsfeste Funkvorrichtungen DBS eines derjenigen Funksignale (hier FB1), die nur zum einmaligen Senden durch diese Funkvorrichtung vorgesehen ist - entgegen dem Funkprotokoll- mehrmals aus. Das mehrmalige Aussenden auf verschiedenen Frequenzen hat den Vorteil, daß die Wahrscheinlichkeit für eine ungestörte Übertragung des Funksignales FB1 erhöht wird. Außerdem wird FB1 nicht auf der üblichen Frequenz f0 gesendet. Die Basisstation DBS sendet FB1 entgegen dem Funkprotokoll nicht auf f0, sondern auf den beiden anderen Frequenzen f1 und f2. Durch diese Maßnahmen wird nicht nur die Störanfälligkeit verringert, sondern auch erreicht, daß nur die erfindungsgemäßen beweglichen Funkvorrichtungen in der Lage sind das gesendete Funksignal FB1 richtig zu empfangen.

Die Basisstation sendet außerdem auf der Frequenz f3 im Zeitschlitz 0 ein weiteres Funksignal SYB, das der Synchronisation dient. Auch dieses Funksignal kann ggfs. mehrmals gesendet werden. Die Frequenzen f1, f2 und f3 sind vorzugsweise diejenigen Frequenzen die entsprechend einer vorgegebenen Reihenfolge (hopping sequence) auf die Frequenz f0 folgen.

In den nächsten beiden Schritt 130 und 140 wartet die Mobilstation MMS auf den Empfang der Funksignale FB1 und SYB und prüft, ob diese Funksignale alle vollständig und richtig innerhalb einer Zeitdauer T0 empfangen worden sind.

Ist dies der Fall, so wird in einem nachfolgenden Schritt 150 von der Mobilstation MMS ein Bestätigungssignal ACK gesendet, daß der Basisstation den richtigen Empfang anzeigt. Sind die Funksignale nicht vollständig oder nicht richtig von der Mobilstation empfangen worden, so sendet die Mobilstation MMS erneut das Funksignal FB auf der Frequenz f0; die Schritte 110 bis 140 werden wiederholt. Demnach sendet die bewegliche Funkvorrichtung MMS eines der ersten Funksignale (hier FB) solange wiederholt aus, bis die ortsfeste Funkstation DBS antwortet. Das Aussenden von FB wird nicht unendlich oft wiederholt, sondern nur n-mal, z.B. 10-mal. Hat die Basisstation dann immer noch nicht geantwortet, wird das Verfahren für eine längere Pause von etwa 15 Minuten unterbrochen.

Hat die Mobilstation eine Antwort von der Basistation empfangen (Schritt 140), so wird der Empfang bestätigt (Schritt 150). In nachfolgenden Schritten 160 und 170 prüft die Basisstation DBS, ob sie das Bestätigungssignal ACK noch vor dem Ablauf der Zeitdauer T1 empfangen hat. Ist dies der Fall, so wird in weiteren Schritten 180 von der Basisstation ein freier Zeitschlitz N für den Zugriff durch die Mobilstation vergeben. Die Mobilstation bestätigt die Zuteilung des Zeitschlitzes.

Wird in den Schritten 160 und 170 festgestellt, daß das Bestätigungssignal ACK noch nicht vor dem Ablauf der Zeitdauer T1 empfangen worden ist., so überwacht die Basisstation erneut den Empfang des Funsignales FB auf der Frequenz f0. Demnach werden die Schritte 120 bis 170 solange wiederholt, bis von der Basisstation das Bestätigungssignal ACK innerhalb der vorgebbaren Zeitdauer T2 empfangen worden ist.

In den weiteren Schritten 190 wird dann der Aufbau der Funkverbindung gemäß des Funkprotokolls PGSM fortgeführt.

## Patentansprüche

1. Funkkommunikationssystem (SYS) mit einer ortsfesten Funkvorrichtung (DBS) und einer beweglichen Funkvorrichtung (MMS), die beide über eine Funkverbindung (RIF) miteinander Funksignale austauschen gemäß eines vorbestimmten Funkprotokolls (PGSM), wonach erste Funksignale (FB) ausschließlich zum Senden durch die ortsfeste Funkvorrichtung (DBS) und zweite Funksignale ausschließlich zum Senden durch die bewegliche Funkvorrichtung (MMS) vorgesehen sind,
**dadurch gekennzeichnet, daß**
zum Aufbau der Funkverbindung (RIF) zumindest eine der Funkvorrichtungen (MMS) entgegen dem Funkprotokoll (PGSM) eines derjenigen ersten Funksignale (FB) sendet, die eigentlich zum Senden durch die andere Funkvorrichtung (DBS) vorgesehen sind.

2. Funkkommunikationssystem (SYS) nach Anspruch 1, **dadurch gekennzeichnet, daß** das vorbestimmte Funkprotokoll ein für ein öffentliches Mobilfunksystem (PLMN) vorbestimmtes Funkprotokoll (PGSM) ist, und daß die ortsfeste Funkvorrichtung (DBS) die dem öffentlichen Mobilfunksystem (PLMN) zugewiesenen Funkkanäle überwacht und freie Funkkanäle für die Benutzung in dem privaten Funkkommunikationssystem (SYS) der beweglichen Funkvorrichtung (MMS) mitteilt.

3. Funkkommunikationssystem (SYS) nach Anspruch 1, **dadurch gekennzeichnet, daß** das vorbestimmte Funkprotokoll ein für ein öffentliches Mobilfunksystem (PLMN) vorbestimmtes Funkprotokoll (PGSM) ist, und daß die Funkvorrichtungen (DBS, MMS) die dem öffentlichen Mobilfunksystem (PLMN) zugewiesenen Funkkanäle für die Benutzung in dem privaten Funkkommunikationssystem (SYS) fortlaufend wechselnd belegen.

4. Funkkommunikationssystem (SYS) nach Anspruch 1, **dadurch gekennzeichnet, daß** die bewegliche Funkvorrichtung (MMS) eines derjenigen ersten Funksignale (FB) aussendet, das einen Datenwert enthält, den eigentlich die ortsfeste Funkvorrichtung (DBS) aufgrund von Messungen der von ihr empfangenen Funksignale ermittelt und anschließend zur Mitteilung an die bewegliche Funkvorrichtung sendet, und daß die bewegliche Funkvorrichtung (MMS) diesen Datenwert außerhalb eines Tolleranzbereiches festlegt, der eigentlich gemäß dem Funkprotokoll (PGSM) eingehalten werden muß.

5. Funkkommunikationssystem (SYS) nach Anspruch 4, **dadurch gekennzeichnet, daß** der Datenwert eigentlich einer von der ortsfesten Funkvorrichtung (DBS) gemessenen Frequenzabweichung entspricht, die die Abweichung der Sendefrequenz der beweglichen Funkvorrichtung (MMS) von der Empfangsfrequenz der ortsfesten Funkvorrichtung (DBS) angibt, und die eigentlich die ortsfeste Funkvorrichtung (DBS) der beweglichen Funkvorrichtung (MMS) zur Korrektur ihrer Sendefrequenz mitteilt.

6. Funkkommunikationssystem (SYS) nach Anspruch 1, **dadurch gekennzeichnet, daß** die bewegliche Funkvorrichtung (MMS) eines der ersten Funksignale (FB) solange wiederholt aussendet, bis die ortsfeste Funkvorrichtung (DBS) antwortet.

7. Funkkommunikationssystem (SYS) nach Anspruch 1, **dadurch gekennzeichnet, daß** zumindest eine der Funkvorrichtungen (DBS) eines derjenigen Funksignale (FB1), die nur zum einmaligen Senden durch diese Funkvorrichtung (DBS) vorgesehen ist, entgegen dem Funkprotokoll (PGSM) mehrmals aussendet.

8. Bewegliche Funkvorrichtung (MMS) für ein Funkkommunikationssystem (SYS) mit einer ortsfesten Funkvorrichtung (DBS), die über eine Funkverbindung (RIF) mit der beweglichen Funkvorrichtung (MMS) Funksignale austauscht gemäß eines vorbestimmten Funkprotokolls (PGSM), wonach erste Funksignale (FB) ausschließlich zum Senden durch die ortsfeste Funkvorrichtung (DBS) und zweite Funksignale ausschließlich zum Senden durch die bewegliche Funkvorrichtung (MMS) vorgesehen sind,
**dadurch gekennzeichnet, daß**
zum Aufbau der Funkverbindung (RIF) die bewegliche Funkvorrichtung (MMS) entgegen dem Funkprotokoll (PGSM) eines der ersten Funksignale (FB) sendet, die eigentlich zum Senden durch die ortsfeste Funkvorrichtung (DBS) vorgesehen sind.

9. Ortsfeste Funkvorrichtung (DBS) für ein Funkkommunikationssystem (SYS), bei dem die ortsfeste Funkvorrichtung (DBS) über eine Funkverbindung (RIF) mit einer beweglichen Funkvorrichtung (MMS) Funksignale austauscht gemäß eines vorbestimmten Funkprotokolls (PGSM), wonach erste Funksignale (FB) ausschließlich zum Senden durch die ortsfeste Funkvorrichtung (DBS) und zweite Funksignale ausschließlich zum Senden durch die bewegliche Funkvorrichtung vorgesehen sind,
**dadurch gekennzeichnet, daß**
zum Aufbau der Funkverbindung die ortsfeste Funkvorrichtung entgegen dem Funkprotokoll eines der zweiten Funksignale sendet, die eigentlich zum Senden durch die bewegliche Funkvorrichtung vorgesehen sind.

10. Verfahren (100) zum Aufbau einer Funkverbindung (RIF) in einem Funkkommunikationssystem (SYS) mit einer ortsfesten Funkvorrichtung (DBS) und einer beweglichen Funkvorrichtung (MMS), die beide miteinander Funksignale austauschen gemäß eines vorbestimmten Funkprotokolls (PGSM), wonach erste Funksignale (FB) ausschließlich zum Senden durch die ortsfeste Funkvorrichtung (DBS) und zweite Funksignale ausschließlich zum Senden durch die bewegliche Funkvorrichtung (MMS) vorgesehen sind,
**dadurch gekennzeichnet, daß**
in einem ersten Schritt (110) zum Aufbau der Funkverbindung (RIF) zumindest eine der Funkvorrichtungen (MMS) entgegen dem Funkprotokoll (PGSM) eines derjenigen Funksignale (FB) sendet, die eigentlich zum Senden durch die andere Funkvorrichtung (DBS) vorgesehen sind.

## Claims

1. A radio communications system (SYS) with a stationary radio device (DBS) and a mobile radio device (MMS),
which exchange radio signals with each other via a radio link (RIF) in accordance with a predefined radio protocol (PGSM), according to which first radio signals (FB) are provided exclusively for transmission by the stationary radio device (DBS) and second radio signals are provided exclusively for transmission by the mobile radio device (MMS),
**characterised in that**
for the purpose of setting up the radio link (RIF) at least one of the radio devices (MMS) transmits, contrary to the radio protocol (PGSM), one of those first radio signals (FB) which are actually provided for transmission by the other radio device (DBS).

2. Radio communications system (SYS) according to Claim 1, **characterised in that** the predefined radio protocol is a radio protocol (PGSM) predefined for a public mobile-radio system (PLMN), and **in that** the stationary radio device (DBS) monitors the radio channels allocated to the public mobile-radio system (PLMN) and informs the mobile radio device (MMS) about free radio channels for use in the private radio communications system (SYS).

3. Radio communications system (SYS) according to Claim 1, **characterised in that** the predefined radio protocol is a radio protocol (PGSM) predefined for a public mobile-radio system (PLMN), and **in that** the radio devices (DBS, MMS) continuously and alternately occupy the radio channels allocated to the public mobile-radio system (PLMN) for use in the private radio communications system (SYS).

4. Radio communications system (SYS) according to Claim 1, **characterised in that** the mobile radio device (MMS) emits one of those first radio signals (FB) which contains a data value which the stationary radio device (DBS) actually ascertains on the basis of measurements of the radio signals received by said device and subsequently transmits to the mobile radio device for the purpose of notification, and **in that** the mobile radio device (MMS) establishes this data value outside a range of tolerance that actually has to be complied with in accordance with the radio protocol (PGSM).

5. Radio communications system (SYS) according to Claim 4, **characterised in that** the data value actually corresponds to a frequency deviation measured by the stationary radio device (DBS), said frequency deviation specifying the deviation of the transmission frequency of the mobile radio device (MMS) from the reception frequency of the stationary radio device (DBS), and the stationary radio device (DBS) actually communicates said frequency deviation to the mobile radio device (MMS) for the purpose of correcting its transmission frequency.

6. Radio communications system (SYS) according to Claim 1, **characterised in that** the mobile radio device (MMS) repeatedly emits one of the first radio signals (FB) until such time as the stationary radio device (DBS) responds.

7. Radio communications system (SYS) according to Claim 1, **characterised in that** at least one of the radio devices (DBS) repeatedly emits, contrary to the radio protocol (PGSM), one of those radio signals (FB1) which are provided only for non-recurring transmission by said radio device (DBS).

8. A mobile radio device (MMS) for a radio communications system (SYS) with a stationary radio device (DBS) which exchanges radio signals with the mobile radio device (MMS) via a radio link (RIF) in accordance with a predefined radio protocol (PGSM), according to which first radio signals (FB) are provided exclusively for transmission by the stationary radio device (DBS) and second radio signals are provided exclusively for transmission by the mobile radio device (MMS),
**characterised in that**
for the purpose of setting up the radio link (RIF) the mobile radio device (MMS) transmits, contrary to the radio protocol (PGSM), one of the first radio signals (FB) which are actually provided for transmission by the stationary radio device (DBS).

9. A stationary radio device (DBS) for a radio communications system (SYS), wherein the stationary radio device (DBS) exchanges radio signals with a mobile radio device (MMS) via a radio link (RIF) in accordance with a predefined radio protocol (PGSM), according to which first radio signals (FB) are provided exclusively for transmission by the stationary radio device (DBS) and second radio signals are provided exclusively for transmission by the mobile radio device,
**characterised in that**
for the purpose of setting up the radio link the stationary radio device transmits, contrary to the radio protocol, one of the second radio signals which are actually provided for transmission by the mobile radio device.

10. A process (100) for setting up a radio link (RIF) in a radio communications system (SYS) with a stationary radio device (DBS) and a mobile radio device (MMS), which exchange radio signals with each other in accordance with a predefined radio protocol (PGSM), according to which first radio signals (FB) are provided exclusively for transmission by the stationary radio device (DBS) and second radio signals are provided exclusively for transmission by the mobile radio device (MMS),
**characterised in that**
in a first step (110) for setting up the radio link (RIF) at least one of the radio devices (MMS) transmits, contrary to the radio protocol (PGSM), one of those radio signals (FB) which are actually provided for transmission by the other radio device (DBS).

## Revendications

1. Système de radiocommunication (SYS) comprenant un dispositif de radiocommunication fixe (DBS) et un dispositif de radiocommunication mobile (MMS) qui échangent tous deux des signaux radioélectriques entre eux par le biais d'une liaison radioélectrique (RIF) conformément à un protocole de radiocommunication prédéfini (PGSM) selon lequel des premiers signaux radioélectriques (FB) sont prévus exclusivement pour être émis par le dispositif de radiocommunication fixe (DBS) et des deuxièmes signaux radioélectriques exclusivement pour être émis par le dispositif de radiocommunication mobile (MMS), **caractérisé en ce que** pour établir la liaison radioélectrique (RIF), au moins l'un des dispositifs de radiocommunication (MMS), contrairement au protocole de radiocommunication (PGSM), émet l'un des premiers signaux radioélectriques (FB) qui sont en réalité prévus pour être envoyés par l'autre dispositif de radiocommunication (DBS).

2. Système de radiocommunication (SYS) selon la revendication 1, **caractérisé en ce que** le protocole de radiocommunication prédéfini est un protocole de radiocommunication (PGSM) prédéfini pour un système de radiocommunication mobile public (PLMN) et que le dispositif de radiocommunication fixe (DBS) surveille les canaux de radiocommunication affectés au système de radiocommunication public (PLMN) et communique au dispositif de radiocommunication mobile (MMS) les canaux de radiocommunication libres en vue de leur utilisation dans le système de radiocommunication privé (SYS).

3. Système de radiocommunication (SYS) selon la revendication 1, **caractérisé en ce que** le protocole de radiocommunication prédéfini est un protocole de radiocommunication (PGSM) prédéfini pour un système de radiocommunication mobile public (PLMN) et que les dispositifs de radiocommunication (DBS, MMS) occupent continuellement en alternance les canaux de radiocommunication affectés au système de radiocommunication public (PLMN) en vue de leur utilisation dans le système de radiocommunication privé (SYS).

4. Système de radiocommunication (SYS) selon la revendication 1, **caractérisé en ce que** le dispositif de radiocommunication mobile (MMS) émet l'un des premiers signaux radioélectriques (FB) qui contient une valeur de données qui est en réalité déterminée par le dispositif de radiocommunication fixe (DBS) sur la base de mesures des signaux radioélectriques qu'il reçoit et émet ensuite pour information au dispositif de radiocommunication mobile, et que le dispositif de radiocommunication mobile (MMS) détermine cette valeur de données en-dehors d'une plage de tolérance qui doit en réalité être respectée conformément au protocole de radiocommunication (PGSM).

5. Système de radiocommunication (SYS) selon la revendication 4, **caractérisé en ce que** la valeur de données correspond en réalité à un écart de fréquence mesuré par le dispositif de radiocommunication fixe (DBS) qui indique l'écart entre la fréquence d'émission du dispositif de radiocommunication mobile (MMS) et la fréquence de réception du dispositif de radiocommunication fixe (DBS) et qui est en réalité communiqué par le dispositif de radiocommunication fixe (DBS) au dispositif de radiocommunication mobile (MMS) en vue corriger sa fréquence d'émission.

6. Système de radiocommunication (SYS) selon la revendication 1, **caractérisé en ce que** le dispositif de radiocommunication mobile (MMS) émet de manière répétitive l'un des premiers signaux radioélectriques (FB) jusqu'à ce que le dispositif de radiocommunication fixe (DBS) réponde.

7. Système de radiocommunication (SYS) selon la revendication 1, **caractérisé en ce qu'**au moins l'un des dispositifs de radiocommunication (DBS) émet, contrairement au protocole de radiocommunication (PGSM), l'un des signaux radioélectriques (FB1) qui n'est prévu pour être émis qu'une seule fois pas ce dispositif de radiocommunication (DBS).

8. Dispositif de radiocommunication mobile (MMS) pour un système de radiocommunication (SYS) comprenant un dispositif de radiocommunication fixe (DBS) qui échange des signaux radioélectriques avec le dispositif de radiocommunication mobil (MMS) par le biais d'une liaison radioélectrique (RIF) conformément à un protocole de radiocommunication prédéfini (PGSM) selon lequel des premiers signaux radioélectriques (FB) sont prévus exclusivement pour être émis par le dispositif de radiocommunication fixe (DBS) et des deuxièmes signaux radioélectriques exclusivement pour être émis par le dispositif de radiocommunication mobile (MMS), **caractérisé en ce que** pour établir la liaison radioélectrique (RIF), le dispositif de radiocommunication mobile (MMS), contrairement au protocole de radiocommunication (PGSM), émet l'un des premiers signaux radioélectriques (FB) qui sont en réalité prévus pour être envoyés par le dispositif de radiocommunication fixe (DBS).

9. Dispositif de radiocommunication fixe (DBS) pour un système de radiocommunication (SYS) avec lequel le dispositif de radiocommunication fixe (DBS) échange des signaux radioélectriques avec un dispositif de radiocommunication mobil (MMS) par le biais d'une liaison radioélectrique (RIF) conformément à un protocole de radiocommunication prédéfini (PGSM) selon lequel des premiers signaux radioélectriques (FB) sont prévus exclusivement pour être émis par le dispositif de radiocommunication fixe (DBS) et des deuxièmes signaux radioélectriques exclusivement pour être émis par le dispositif de radiocommunication mobile, **caractérisé en ce que** pour établir la liaison radioélectrique, le dispositif de radiocommunication fixe, contrairement au protocole de radiocommunication, émet l'un des deuxièmes signaux radioélectriques qui sont en réalité prévus pour être envoyés par le dispositif de radiocommunication mobile.

10. Procédé (100) pour établir une liaison radioélectrique (RIF) dans un système de radiocommunication (SYS) comprenant un dispositif de radiocommunication fixe (DBS) et un dispositif de radiocommunication mobile (MMS) qui échangent tous deux des signaux radioélectriques entre eux conformément à un protocole de radiocommunication prédéfini (PGSM) selon lequel des premiers signaux radioélectriques (FB) sont prévus exclusivement pour être émis par le dispositif de radiocommunication fixe (DBS) et des deuxièmes signaux radioélectriques exclusivement pour être émis par le dispositif de radiocommunication mobile (MMS), **caractérisé en ce que** dans une première étape, pour établir la liaison radioélectrique (RIF), au moins l'un des dispositifs de radiocommunication (MMS), contrairement au protocole de radiocommunication (PGSM), émet l'un des premiers signaux radioélectriques (FB) qui sont en réalité prévus pour être envoyés par l'autre dispositif de radiocommunication (DBS).
